# EUROPEAN PATENT SPECIFICATION

(11) **EP 1 879 150 B1**
(45) Date of publication and mention of the grant of the patent: **22.04.2009**
(21) Application number: 07111920.0
(22) Date of filing: 06.07.2007
(51) Int. Cl.: G07B 15/00, G07C 5/00, G08G 1/017

(54) **Method and protocol for transmitting information within an enforcement system of a monitoring or road charging system, enforcement unit and mobile device**
Verfahren und Protokoll zur Informationsübertragung in einem Durchsetzungssystem eines Überwachungs- oder Mautsystems, Durchsetzungseinheit und mobile Vorrichtung
Procédé et contrôle pour transmettre des informations dans un système d'application d'un système de surveillance ou de chargement des routes, unité d'application et dispositif mobile

(30) Priority: 14.07.2006 EP 06014717
(43) Date of publication of application: 16.01.2008
(73) Proprietor: Vodafone Holding GmbH, 40213 Düsseldorf (DE)
(72) Inventor: Borman, Maurice, 4001 Tiel (NL)
(74) Representative: Cullinane, Marietta Bettina

(56) References cited:
- EP-A- 1 271 986
- EP-B- 0 750 828
- WO-A-20/04025573
- WO-A-20/04100074
- US-B1- 6 340 934

## Description

The present invention relates to a method and a protocol for transmitting information within an enforcement system of a monitoring or road charging system. Furthermore the invention relates to an enforcement unit and mobile device for an enforcement system of a monitoring or road charging system.

For monitoring purposes or for determining fees such as toll fees or road charge for usage of specific streets or certain areas the position of vehicles has to be determined. Different solutions have been suggested. The basic model, wherein the driver has to supply information about the vehicles position manually, is labour and cost intensive and therefore new models have been sought. One approach, which has been suggested, is the usage of microwave based communication systems. These systems are also referred to as Dedicated Short Range Communication (DSRC). An advantage of these systems is the reduced amount of information necessary and the simplified comparison and adjustment of information and status, such as for example the license plate of a vehicle. By means of the information, which is provided, data from different sources only has to be compared, which simplifies the process significantly over a method, which exclusively relies on a digital evaluation of a digital picture or on other sensors.

One disadvantage of the usage of DSRC systems is, however, that the terminal, which has to be provided at the vehicle will have to comprise the mandatory DSRC components. Other terminals, which do not have such a component will not automatically be compatible with the system. This causes increased maintenance costs or terminals may not be admitted due to the lack of compatibility. The same applies for systems wherein not only the detection of a vehicle but also the localizing used for charging of toll fees is performed by means of DSRC.

There have also been attempts to utilize mobile devices or terminals of a cellular network in a system for localizing and charging vehicles. Such an approach is described for example in EP 0 750 828 B1. The position of a vehicle is determined by using a mobile station of a mobile telephone network. In addition to the functions within the mobile telephone network, the mobile station evaluates signals received from a transmitter, which forms a locally limited trigger cell. The received information is compared to information on the trigger cell received emitted in the mobile telephone network. Only if the information corresponds, the signals received from the transmitter associated with the trigger cell are used for position finding. The size of the trigger zone is determined by calculation. The speed at which the trigger cell is being passed and the time, which is necessary for the mobile station to determine the trigger cell are being considered. The communication between the mobile station and the transmitter of the trigger cell is carried out via a highway-toll-collection unit (AGE) which communicates with the mobile station. The estimation whether the location information is being used for position finding is carried out at the mobile station.

One disadvantage of this solution is that the size of the cell will not be large enough to allow a response of the mobile station to the transmitter while still in the cell.

The problem underlying the present invention is thus to provide a solution which ensures the receipt of a response of a mobile device at an enforcement unit without necessitating the coverage area of the enforcement unit to be increased.

The invention is based on the finding that the problem can be solved if a terminal of a cellular mobile network is being used as a stand-alone short range device.

According to a first aspect the problem is solved by a method for transmitting information within an enforcement system of a monitoring or road charging system, wherein at least one mobile device and at least one enforcement unit are provided. The method is characterized in that the mobile device upon receipt of a triggering signal from the enforcement unit initiates a transmission of information related to the function of the mobile device as an On-Board-Unit of the monitoring or road charging system to the enforcement unit via a Random Access Channel (RACH).

The enforcement unit to which the information is being transmitted may be the enforcement unit from which the triggering signal has been received. It is, however also possible that the information is transmitted to a different enforcement unit such as a central processing unit. Also in this case the transmission is initiated from the enforcement unit. By initiating the transmission by the mobile device, the time between the initial receipt of the triggering signal and the arrival of the information at the unit where it will be further processed can be minimized. Preferably the transmission initiated by the mobile device is a direct transmission to the enforcement unit.

According to the invention, the mobile device initiates a transmission of information via an uplink transmission channel. By using an uplink transmission channel, which can be initiated by the mobile device the transmission of information related to the mobile device, in particular related to its function as an On-Board-Unit of the monitoring or road charging system, can be effected fast. A high set up time of a communication channel, which is necessary for standard transmission of information within the cellular network can be avoided. In addition, the usage of a standard communication channel of the cellular network incurs a considerable amount of traffic within the network which has to be handled by the respective Base Stations (BS) of the cellular network.

According to one embodiment of the invention, the transmission is instead performed via an uplink transmission or transport channel directly to the enforcement unit. The enforcement unit is designed to act according to a corresponding network entity of the cellular network. In particular, the enforcement unit will, like the BTS (Base Transceiver Station) of a GPRS network or the Node B of a UMTS network, be capable of receiving the information transmitted via the uplink transmission channel. The transmission channel is the Random Access Channel (RACH) that can be initiated by a mobile device of a cellular network.

Within the transmission channel the information to be transmitted may be provided instead of the encrypted bits, which in standard usage of the channel within the cellular network would include request information for requesting a signalling channel. The encryption may be preformed at the mobile device.

The encrypted bits which may be used to transmit information may be the so called DATA bits of a GPRS-system, which are 36 encrypted bits following the TRAIN of the channel. In 3G UMTS- and 4G system similar implementation may apply, i.e. bits provided in the respective channel will be used to transfer information from the mobile device or OBU to the enforcement unit. If more than one OBU transmits information to the enforcement unit, the respective information will be identified to belong to the individual OBU by the information within the channel used for transmission.

The mobile device may according to one embodiment transmit an identification of the mobile device to the enforcement unit. Also additional information on the mobile device may be transmitted to the enforcement unit. The thus transmitted information can be used for identifying the mobile device and assigning an appropriate location to a vehicle to which the mobile device is related, e.g. in which the mobile device is being transported or installed.

The mobile device may be assigned to a vehicle, by providing information, which allows the determination of the respective vehicle, such as the license plate number or the name or identification number of the owner of the car on the mobile device.

Hence, the mobile device will act as an On-Board-Unit OBU. Within the OBU information on the OBU such as an ID of the OBU but also the current position and status of the OBU may be stored.

The area covered by an enforcement unit will hereinafter also be referred to as an enforcement or pico cell.

According to another aspect the invention relates to a protocol for transmitting information within an enforcement system of a monitoring or road charging system, wherein at least one mobile device and at least one enforcement unit are provided. The protocol is characterized in that the mobile device assigns information on the mobile device relating to its function as an On-Board-Unit (OBU) to the Random Access Channel (RACH) and initiates the transmission to the enforcement unit.

The advantage of this protocol is the time reduction for providing the OBU information to the enforcement unit. By assigning or including the information to be transmitted in the signal emitted to the enforcement unit the transmission will occur promptly. This protocol is advantageous over a protocol where first a communication channel for communication with the enforcement unit is requested and subsequently the information is transmitted via the assigned communication channel. The random access transmission in contrast will be performed according to the protocol prevailing in the cellular network. Hence, the protocol is advantageous in that it complements the transmission protocol of the cellular network.

According to the protocol prevailing in 2G systems several Access Bursts may originate from the same mobile device. The access bursts of one user are all assigned to the same time slot. Preferably, only the first Access Burst will include the detailed information on the OBU, such as the OBU ID. Subsequent Access Bursts may provide additional information. The allocation of a time slot to a user may also be used for handling more than one Access Burst from different OBU's, as the respective OBU information of one OBU will be transmitted via an Access Burst assigned to a time slot that is different from the time slot assigned to an Access Burst from a different OBU. For systems of higher generations 3G, 4G similar implementations are possible.

Preferably the protocol provides that the assigning and transmission are triggered by the receipt of a triggering signal from the enforcement unit via a channel different from the transmission channel used for transmission of information to the enforcement unit.

The triggering signal will include information on the enforcement unit, e.g. a cell ID of the pico cell covered by the enforcement unit. This information will be used to initiate the transmission of information from the mobile device to the appropriate enforcement unit, i.e. the enforcement unit from which the triggering signal has been received.

With the present invention it is possible to assure that the information will be received at the appropriate enforcement unit, as the time for initiating the transmission of information is low. Hence, the vehicle will still be within the pico cell of the enforcement unit, where the triggering signal originated from at the time of transmission of the information. An increase in size of the pico cell, which would require increased power supply to the enforcement unit is not necessary.

The uplink transmission channel used for transmission of information within the inventive protocol may be provided within the cellular network of the mobile device for signalling channel requests to a Base Station (BS) of the cellular network. According to the invention, the channel is the RACH.

According to a further aspect of the invention an enforcement unit is provided for an enforcement system of a monitoring or road charging system, wherein at least one mobile device and at least one enforcement unit are provided. The enforcement unit is characterized in that it comprises a receiving unit for receiving information from at least one mobile device related to the function of the mobile device as an On-Board-Unit of the monitoring or road charging system via the Random Access Channel (RACH) and a processing unit for processing the information received via this channel.

The receiving unit of the enforcement unit will be set to the uplink channel, so that upon receipt of information via this channel, the information may be transferred to the processing unit and the relevant information will become available at the enforcement unit immediately. The processing of the information will be the extracting of data content from the received signal in an extraction unit. The extraction may be performed by decrypting the encrypted bits according to the encryption method prevailing for the transmission channel or cellular network used.

According to a last aspect, the present invention relates to a mobile device for an enforcement system of a monitoring or road charging system, wherein at least one mobile device and at least one enforcement unit are provided. The mobile device is characterized in that the mobile device has a receiving unit for receiving a triggering signal from at least one enforcement unit and a transmission unit for initiating a transmission of information related to the function of the mobile device as an On-Board-Unit of the monitoring or road charging system to an enforcement unit via the Random Access Channel (RACH).

The mobile device may be a cellphone or any other terminal of a cellular network such as GPRS or UMTS. For filling the dedicated uplink channel with information on the OBU function of the mobile device instead of with a request for signalling channel, the mobile device may be provided with software attending to this different usage of the channel. The mobile device will act as a stand-alone short range device (SRD). It will use the Random Access Channel (RACH) or any other uplink channel that can be initiated from the mobile device to send data directly from the OBU to the enforcement unit, while bypassing the cellular network protocols.

The mobile device may further comprise a generation unit for generating a signal to be transmitted to the enforcement unit by including information of the mobile device into the signal. The generation unit preferably encrypts the information of the mobile device to be included into the signal.

The units and parts thereof may be realized as software and/or hardware components and may at least partially be combined.

Features and advantages which are described for the method also apply to the protocol, the Enforcement-Unit and the mobile device, respectively, and vice versa.

The invention will now be described again with reference to the enclosed figures, wherein:
Figure 1 schematically shows a system for the present invention and
Figure 2 schematically shows time frames, time slots and bursts according to a 2G system.

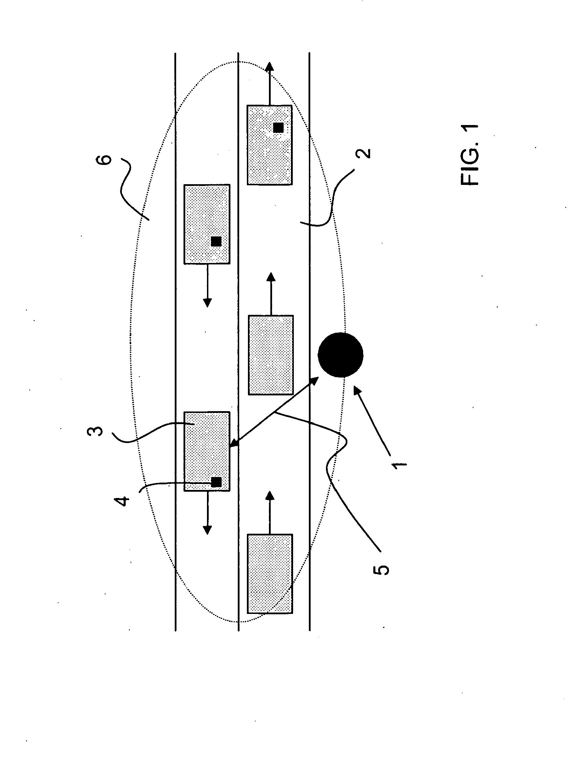

In Figure 1 a section of an enforcement system of a monitoring or road charging system is shown schematically. The system comprises an enforcement unit 1, which is depicted in Figure 1 to be a fixed unit, arranged next to a street 2, where vehicles 3 are to be monitored. At different points of interest, such as along the street or at exits of highways, additional enforcement units (not shown) may be provided. The enforcement unit 1 may be connected to a central unit (not shown), where information obtained at the enforcement unit 1 may be further processed. The connection between the enforcement unit 1 and the central unit may be a wireless communication connection. It is, however, also possible, that the enforcement unit is a stand alone unit, which only emits signals and/or information, but does not receive or further process information.

In the system shown in Figure 1 a few of the vehicles 3 driving on the street 2 are equipped with a mobile device according to the invention, which acts as an On-Board-Unit (OBU) 4. The OBU 4 may be a terminal of a wireless communication network, such as a cell phone. The OBU 4 of each vehicle 3 possesses information on the vehicle 3, such as the license plate number. In addition, the OBU 4 has information on the enforcement system.

Information on the enforcement system which is stored on the OBU 4 preferably comprises information on the protocol for communicating with the enforcement unit 1.

The enforcement unit 1 is equipped with at least one antenna (not shown). The area thus covered by the enforcement unit 1 is a pico cell 6. The size of the pico cell 6 determines, where the OBU's 4 of the vehicles 3 can communicate with the enforcement unit 1.

The communication 5 of the enforcement unit 1 and the OBU 4 will now be described. The OBU 4 of a vehicle 3 within the pico cell 4 of the enforcement unit 1 may receive a triggering signal from the enforcement unit 1. The triggering signal may comprise information such as the cell ID of the pico cell 6. The triggering signal may be broadcast from the enforcement unit 1.

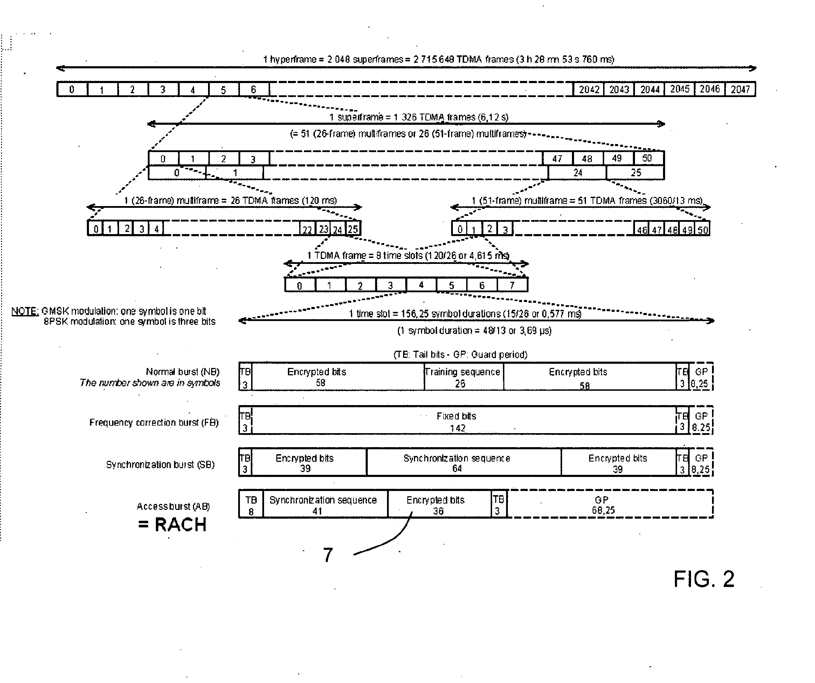

Upon receipt of this triggering signal the OBU 4 uses the Random Access Channel (RACH) of an overlaying cellular network to send data directly from the OBU 4 to the enforcement unit 1. This transmission bypasses the cellular network protocols. The RACH is filled with OBU data instead of signaling data. This is schematically shown in Figure 2 for a 2G system, where the 36 encrypted bits indicated with reference number 7 of the Access Burst will be used for the OBU information. The transmission, however, may be performed according to the protocol of the cellular network. In the example shown in Figure 2, hence, time frames and time slots as defined by the protocol are being used. The amendment according to the invention is, hence, the usage of the 36 encrypted bits for OBU information.

The enforcement unit 1 is equipped with a dedicated receiver to receive the modified RACH and to process its data content immediately.

The transmission and preferably the processing of the information will be performed while the vehicle 3 is still within the range of the enforcement unit 1, i.e. within the pico cell 6. Since the transmission can happen fast due to the protocol used, the size of the pico cell 6 does not have to be increased.

## Claims

1. Method for transmitting information within an enforcement system of a monitoring or road charging system, wherein at least one mobile device (4) and at least one enforcement unit (1) are provided, **characterized in that** the mobile device (4) upon receipt of a triggering signal from the enforcement unit (1) initiates a transmission of information related to the function of the mobile device as an On-Board-Unit of the monitoring or road charging system to the enforcement unit (1) via a Random Access Channel (RACH).

2. Method according to claim 1 , **characterized in that** the mobile device (4) initiates transmission of information to the enforcement unit (1) from which the triggering signal has been received.

3. Method according to anyone of claims 1 or 2, **characterized in that** the mobile device (4) transmits an identification (ID) of the mobile device (4) to the enforcement unit (1).

4. Method according to anyone of claims 1 to 3, **characterized in that** the information to be transmitted to the enforcement unit (1) is encrypted at the mobile device (4).

5. Method according to anyone of claims 1 to 4, **characterized in that** the information is transmitted to the enforcement unit (1) with the first Access Burst (AB) when initiating the transmission.

6. Protocol for transmitting information within an enforcement system of a monitoring or road charging system, wherein at least one mobile device (4) and at least one enforcement unit (1) are provided, **characterized in that** the mobile device (4) assigns information on the mobile device (4) relating to its function as an On-Board-Unit (OBU) to the Random Access Channel (RACH) and initiates the transmission to the enforcement unit (1).

7. Protocol according to claim 6, **characterized in that** the assigning and transmission are triggered by the receipt of a triggering signal from the enforcement unit (1) via a channel different from the transmission channel used for transmission of information to the enforcement unit (1).

8. Protocol according to claim 6 or 7, **characterized in that** the uplink transmission channel used for transmission of information is provided within the cellular network of the mobile device (4) for signalling channel requests to a Base Station (BS) of the cellular network.

9. Protocol according to anyone of claims 6 to 8, **characterized in that** information on the mobile device (4) is included in a sequence of the Access Burst (AB) from the mobile device (4) to the enforcement unit (1) which is assigned to a channel request in the protocol of mobile networks.

10. Enforcement unit for an enforcement system of a monitoring or road charging system, wherein at least one mobile device (4) and at least one enforcement unit (1) are provided, **characterized in that** the enforcement unit (1) comprises a receiving unit for receiving information from at least one mobile device (4) related to the function of the mobile device as an On-Board-Unit of the monitoring or road charging system via the Random Access Channel (RACH) and a processing unit for processing the information received via this channel.

11. Enforcement unit according to claim 10**, characterized in that** the processing unit includes an extraction unit for extracting information from a received signal at a predetermined location within the signal, preferably within the first Access Burst (AB).

12. Mobile device for an enforcement system of a monitoring or road charging system, wherein at least one mobile device (4) and at least one enforcement unit (1) are provided, **characterized in that** the mobile device (4) has a receiving unit for receiving a triggering signal from at least one enforcement unit (1) and a transmission unit for initiating a transmission of information related to the function of the mobile device as an On-Board-Unit of the monitoring or road charging system to an enforcement unit (1) via the Random Access Channel (RACH).

13. Mobile device according to claim 12, **characterized in that** the mobile device has a generation unit for generating a signal to be transmitted to the enforcement unit (1) by including information on the mobile device (4) into the signal.

## Patentansprüche

1. Verfahren zur Übermittlung von Informationen in einem Durchsetzungssystem eines Überwachungs- oder Straßengebührenerhebungssystem, worin zumindest ein mobiles Gerät (4) und zumindest eine Durchsetzungseinheit (1) bereitgestellt sind, **dadurch gekennzeichnet, dass** das mobile Gerät (4) bei Erhalt eines Trigger-Signals von der Durchsetzungseinheit (1) eine Übermittlung von Informationen, die sich auf die Funktion des mobilen Gerätes als bordseitige Einheit des Überwachungs- oder Straßengebührenerhebungssystems beziehen, über einen Random Access Kanal (RACH) an die Durchsetzungseinheit (1) einleitet.

2. Verfahren nach Anspruch 1, **dadurch gekennzeichnet, dass** das mobile Gerät (4) die Übermittlung von Informationen an die Durchsetzungseinheit (1), von der das Trigger-Signal erhalten wurde, einleitet.

3. Verfahren nach einem der Ansprüche 1 oder 2, **dadurch gekennzeichnet, dass** das mobile Gerät (4) eine Identifikation (ID) des mobilen Gerätes (4) an die Durchsetzungseinheit (1) übermittelt.

4. Verfahren nach einem der Ansprüche 1 bis 3, **dadurch gekennzeichnet, dass** die an die Durchsetzungseinheit (1) zu übermittelnden Informationen auf dem mobilen Gerät (4) verschlüsselt werden.

5. Verfahren nach einem der Ansprüche 1 bis 4, **dadurch gekennzeichnet, dass** die Informationen mit dem ersten Access Burst (AB) an die Durchsetzungseinheit (1) übermittelt werden, wenn die Übermittlung eingeleitet wird.

6. Protokoll zur Übermittlung von Informationen in einem Durchsetzungssystem eines Überwachungs- oder Straßengebührenerhebungssystem, worin zumindest ein mobiles Gerät (4) und zumindest eine Durchsetzungseinheit (1) bereitgestellt sind, **dadurch gekennzeichnet, dass** das mobile Gerät (4) Informationen zu dem mobilen Gerät (4), die sich auf dessen Funktion als eine bordseitige Einheit (OBU) beziehen, dem Random Access Channel (RACH) zuordnet und die Übermittlung an die Durchsetzungseinheit (1) einleitet.

7. Protokoll nach Anspruch 6, **dadurch gekennzeichnet, dass** die Zuordnung und Übermittlung durch den Empfang eines Trigger-Signals von der Durchsetzungseinheit (1) über einen Kanal, der sich von dem Übermittlungskanal, der für die Übermittlung von Informationen an die Durchsetzungseinheit (1) verwendet wird, unterscheidet, ausgelöst werden.

8. Protokoll nach einem der Ansprüche 6 oder 7, **dadurch gekennzeichnet, dass** der Uplink-Übermittlungs-Kanal, der für die Übermittlung von Informationen verwendet wird, in dem zellularen Netzwerk des mobilen Gerätes (4) zum Signalisieren von Kanalanfragen an eine Basisstation (BS) des zellularen Netzwerkes, bereitgestellt ist.

9. Protokoll nach einem der Ansprüche 6 bis 8, **dadurch gekennzeichnet, dass** Informationen zu dem mobilen Gerät (4) in einer Sequenz des Access Burst (AB) von dem mobilen Gerät (4) zu der Durchsetzungseinheit (1), der in dem Protokoll mobiler Netzwerke einer Kanalanfrage zugeordnet ist, enthalten sind.

10. Durchsetzungseinheit für ein Durchsetzungssystem eines Überwachungs- oder Straßengebührenerhebungssystem, worin zumindest ein mobiles Gerät (4) und zumindest eine Durchsetzungseinheit (1) bereitgestellt sind, **dadurch gekennzeichnet, dass** die Durchsetzungseinheit (1) eine Empfangseinheit zum Empfangen von Informationen von zumindest einem mobilen Gerät (4) über den Random Access Channel (RACH), die sich auf die Funktion des mobilen Gerätes als bordseitige Einheit des Überwachungs- oder Straßengebührenerhebungssystems beziehen, und eine Verarbeitungseinheit zum Verarbeiten der Informationen, die über diesen Kanal enthalten wurden, umfasst.

11. Durchsetzungseinheit nach Anspruch 10, **dadurch gekennzeichnet, dass** die Verarbeitungseinheit eine Extraktionseinheit zum Extrahieren von Informationen aus einem empfangenen Signal an einer vorbestimmten Stelle innerhalb des Signals, vorzugsweise innerhalb des ersten Access Bursts (AB), umfasst.

12. Mobiles Gerät für ein Durchsetzungssystem eines Überwachungs- oder Straßengebührenerhebungssystems, worin zumindest ein mobiles Gerät (4) und zumindest eine Durchsetzungseinheit (1) bereitgestellt sind, **dadurch gekennzeichnet, dass** das mobile Gerät (4) eine Empfangseinheit zum Empfangen eines Trigger-Signals von zumindest einer Durchsetzungseinheit (1) und eine Übermittlungseinheit zum Einleiten einer Übermittlung von Informationen, die sich auf die Funktion des mobilen Gerätes als bordseitige Einheit des Überwachungs- oder Straßengebührenerhebungssystems beziehen, an eine Durchsetzungseinheit (1) über den Random Access Channel (RACH).

13. Mobiles Gerät nach Anspruch 12, **dadurch gekennzeichnet, dass** das mobile Gerät eine Erzeugungseinheit zum Erzeugen eines an die Durchsetzungseinheit (1) zu übermittelnden Signals durch Einbeziehen von Informationen zu dem mobilen Gerät (4) in das Signal.

## Revendications

1. Procédé de transmission d'informations à l'intérieur d'un système d'application d'un système de surveillance ou de péage routier, dans lequel au moins un dispositif mobile (4) et au moins une unité d'application (1) sont prévus, **caractérisé en ce que** le dispositif mobile (4), lors de la réception d'un signal de déclenchement de l'unité d'application (1), initialise une transmission d'informations associées à la fonction du dispositif mobile en tant qu'unité embarquée du système de surveillance ou de péage routier vers l'unité d'application (1) par l'intermédiaire d'un canal d'accès aléatoire (RACH).

2. Procédé selon la revendication 1, **caractérisé en ce que** le dispositif mobile (4) initie une transmission d'informations vers l'unité d'application (1) à partir de laquelle le signal de déclenchement a été reçu.

3. Procédé selon l'une quelconque des revendications 1 ou 2, **caractérisé en ce que** le dispositif mobile (4) transmet une identification (ID) du dispositif mobile (4) vers l'unité d'application (1).

4. Procédé selon l'une quelconque des revendications 1 à 3, **caractérisé en ce que** les informations à transmettre vers l'unité d'application (1) sont cryptées sur le dispositif mobile (4).

5. Procédé selon l'une quelconque des revendications 1 à 4, **caractérisé en ce que** les informations sont transmises à l'unité d'application (1) avec le premier paquet de données d'accès (AB) lors de l'initiation de la transmission.

6. Protocole de transmission d'informations à l'intérieur d'un système d'application d'un système de surveillance ou de péage routier, dans lequel au moins un dispositif mobile (4) et au moins une unité d'application (1) sont prévus, **caractérisé en ce que** le dispositif mobile (4) affecte des informations sur le dispositif mobile (4) se rapportant à sa fonction en tant qu'unité embarquée (OBU) au canal à accès aléatoire (RACH) et initie la transmission avec l'unité d'application (1).

7. Protocole selon la revendication 6, **caractérisé en ce** l'affectation et la transmission sont déclenchées par la réception d'un signal de déclenchement à partir de l'unité d'application (1) par l'intermédiaire d'un canal différent du canal de transmission utilisé pour la transmission d'informations vers l'unité d'application (1).

8. Protocole selon la revendication 6 ou 7, **caractérisé en ce que** le canal de transmission de liaison montante utilisé pour la transmission d'informations est prévue à l'intérieur du réseau cellulaire du dispositif mobile (4) afin de signaler des demandes de canal à la station de base (BS) du réseau cellulaire.

9. Protocole selon l'une quelconque des revendications 6 à 8, **caractérisé en ce que** les informations sur le dispositif mobile (4) sont intégrées dans une séquence du paquet de données d'accès (AB) à partir du dispositif mobile (4) vers l'unité d'application (1) qui est affecté à une demande de canal dans le protocole de réseaux mobiles.

10. Unité d'application pour un système d'application d'un système de surveillance ou de péage routier, dans lequel au moins un dispositif mobile (4) et au moins une unité d'application (1) sont prévus, **caractérisée en ce que** l'unité d'application (1) comprend une unité de réception destinée à recevoir des informations à partir d'au moins un dispositif mobile (4) se rapportant à la fonction du dispositif mobile en tant qu'une unité embarquée du système de surveillance ou de péage routier par l'intermédiaire du canal à accès aléatoire (RACH) et une unité de traitement destinée à traiter les informations reçues par l'intermédiaire de ce canal.

11. Unité d'application selon la revendication 10, **caractérisée en ce que** l'unité de traitement comporte une unité d'extraction destinée à extraire des informations à partir d'un signal reçu à un emplacement prédéterminé à l'intérieur du signal, de préférence à l'intérieur du premier paquet de données d'accès (AB).

12. Dispositif mobile d'un système d'application d'un système de surveillance ou de péage routier, dans lequel au moins un dispositif mobile (4) et au moins une unité d'application (1) sont prévus, **caractérisé en ce que** le dispositif mobile (4) comporte une unité de réception destinée à recevoir un signal de déclenchement à partir d'au moins une unité d'application (1) et une unité de transmission destinée à initier une transmission d'informations associées à la fonction du dispositif mobile en tant qu'unité embarquée du système de surveillance ou de péage routier avec une unité d'application (1) par l'intermédiaire du canal à accès aléatoire (RACH).

13. Dispositif mobile selon la revendication 12, **caractérisé en ce que** le dispositif mobile comporte une unité de production destinée à produire un signal à transmettre à l'unité d'application (1) en intégrant des informations sur le dispositif mobile (4) dans le signal.
